# FASCICULE DE BREVET EUROPEEN

(11) **EP 3 384 254 B1**
(45) Date de publication et mention de la délivrance du brevet: **03.01.2024**
(21) Numéro de dépôt: 16810271.3
(22) Date de dépôt: 30.11.2016
(51) Int. Cl.: G01J 3/10, G01J 3/44, G01J 3/02

(54) **DISPOSITIF MEDICAL DE SPECTROSCOPIE OPTIQUE BIMODALE FIBREE**
MEDIZINISCHE VORRICHTUNG FÜR FASERIGE BIMODALE OPTISCHE SPEKTROSKOPIE
MEDICAL DEVICE FOR FIBRED BIMODAL OPTICAL SPECTROSCOPY

(30) Priorité: 30.11.2015 FR 1561599
(43) Date de publication de la demande: 10.10.2018
(73) Titulaire: Université de Lorraine, 54000 Nancy (FR); Centre National de la Recherche Scientifique, 75016 Paris (FR)
(72) Inventeur: AMOUROUX, Marine, 54425 Pulnoy (FR); BLONDEL, Walter, 54425 Pulnoy (FR); DELCONTE, Alain, 54600 Villiers-lès-Nancy (FR)
(74) Mandataire: IPAZ
(86) Numéro de dépôt international: PCT/EP2016/079274
(87) Numéro de publication internationale: WO 2017/093316

(56) Documents cités:
- WO-A1-2014/124531
- US-A1- 2004 054 270
- US-A1- 2007 167 836
- US-A1- 2008 097 174
- US-A1- 2015 216 398
- GILBERTO DÍAZ-AYIL ET AL: "Spatially resolved bimodal spectroscopy for classification/evaluation of mouse skin inflammatory and pre-cancerous stages", OPTICAL SENSING II, vol. 7368, 2 juillet 2009 (2009-07-02), page 73680F, XP055290746, 1000 20th St. Bellingham WA 98225-6705 USA ISSN: 0277-786X, DOI: 10.1117/12.831628 ISBN: 978-1-62841-971-9

## Description

La présente invention se rapporte à un dispositif de spectroscopie optique bimodale fibrée pour générer et enregistrer des spectres de signaux d'auto-fluorescence et de réflectance diffuse provenant d'un échantillon biologique.

L'invention concerne le domaine de la spectroscopie optique fibrée appliquée à la détection de lésions précancéreuses. L'invention a pour but de détecter et de caractériser de façon non invasive des lésions précancéreuses et difficilement décelables en clinique. Certaines transformations métaboliques et morphologiques, pathologiques et précoces, modifient les propriétés optiques des tissus biologiques à l'échelle subcellulaire, cellulaire et tissulaire. L'enjeu consiste à trouver dans les spectres d'intensité acquis, les informations discriminantes liées aux caractéristiques et aux concentrations des éléments constitutifs (absorbeurs, diffuseurs et fluorophores endogènes), afin de pouvoir déterminer *in situ* la nature du tissu.

Des méthodes de spectroscopie optique fibrée ont été étudiées notamment dans la thèse de Marine Amouroux en 2008 (http://docnum.univ-lorraine.fr.bases-doc.univ-lorraine.fr/public/SCD_T_2008_0050_AMOUROUX.pdf), ainsi que dans la thèse de Gilberto Diaz en 2009 (http://docnum.univ-lorraine.fr/public/INPL/2009_DIAZ_AYIL_G.pdf).

Ces deux thèses décrivent une excitation séquentielle réalisée avec une solution technologique à base d'une source xénon à arc court associée à des filtres passe-bande et des filtres linéairement variables pour sélectionner des bandes étroites. Cette réalisation présente notamment l'inconvénient majeur d'un fort dégagement de chaleur qui est rédhibitoire pour passer les tests de marquage CE selon la directive européenne 93/42/CE.

On connaît le document US8189196 qui décrit un dispositif de spectroscopie optique fibrée utilisant des diodes électroluminescentes en excitation. Les longueurs d'onde d'excitation vont de 260 nm à 1400 nm. Un injecteur permet d'injecter plusieurs sources monochromatiques dans un ensemble de fibres optiques (cet ensemble prenant le nom de « sonde optique »). Chaque source lumineuse passe par la sonde de façon à générer en sortie plusieurs faisceaux alimentant différents échantillons. En réception, des photodiodes sont utilisées pour détecter la lumière ayant traversé les échantillons.

On connaît également le document US8244332 décrivant un dispositif scanner laser apte à réaliser de la spectroscopie. Des diodes lasers et une lampe tungstène-halogène permettent de réaliser des mesures de spectres sur 30 à 45 secondes en utilisant une fibre optique qui achemine les signaux provenant de l'échantillon vers le spectromètre.

On connaît aussi le document US 20090043296 décrivant un système de traitement laser utilisant deux dispositifs de spectroscopie pour surveiller les propriétés spectrales de l'échantillon. Deux fibres optiques de détection sont utilisées pour l'émission et la détection de signaux générés par des diodes électroluminescentes. Chaque fibre optique de détection est prévue pour recueillir des signaux provenant d'une zone donnée, sur ou en périphérie de la lésion. La source de lumière blanche utilisée est une source tungstène halogène ou xénon.

Les dispositifs de l'art antérieur sont parfois encombrants et nécessitent des durées non négligeables pour les mesures spectrales.

US2007/0167836 A1 et WO2014/124531 A1 divulguent des dispositifs de spectroscopie bimodale.

La présente invention a pour but un nouveau dispositif peu encombrant, conforme aux exigences de compatibilité électro-magnétique, sécurité électrique et photobiologique propres aux dispositifs médicaux.

Un autre but de l'invention est un nouveau dispositif rapide en termes de mesures de spectres.

Un autre but de l'invention est un tout nouveau dispositif de grande précision diagnostique.

On atteint au moins l'un des objectifs précités avec un dispositif de spectroscopie optique bimodale pour élaborer des spectres de signaux d'auto-fluorescence et de réflectance diffuse provenant d'un échantillon biologique selon la revendication 1.

Par côté distal, on entend l'extrémité de la sonde optique souple destinée à être disposée sur ou proche de l'échantillon, le côté proximal étant l'extrémité connectée aux blocs fonctionnels d'illumination et de détection.

Les spectres obtenus sont des mesures d'irradiance de lumière en fonction de la longueur d'onde.

Avec le dispositif selon l'invention, on utilise plusieurs diodes électroluminescentes, chacune émettant à une bande de fréquence réduite et distincte des autres de façon à avoir une bonne résolution spectrale à l'excitation. A la détection, on utilise avantageusement plusieurs groupes de fibres optiques de réception. Chaque groupe comporte plusieurs fibres optiques disposées en cercle centré autour de la fibre optique d'excitation. Disposer de plusieurs fibres optiques sur un même cercle permet d'optimiser (en termes de rapport signal à bruit) le signal enregistré à chaque distance de la fibre optique excitatrice tout en limitant l'irradiance d'illumination à laquelle l'échantillon (notamment un patient) est soumis pour obtenir l'autofluorescence notamment. Chaque cercle ainsi formé correspond à une distance avec la fibre excitatrice et à une profondeur dans l'échantillon tel une peau humaine ou animale. En effet, il a été démontré que plus on s'éloigne du centre de la lumière d'excitation, plus on recueille des signaux provenant des couches plus profondes dans l'échantillon. Par exemple, on détecte idéalement l'hémoglobine avec des fibres optiques placées à une plus grande distance de la fibre optique d'excitation car l'hémoglobine est plus abondante dans les couches plus profondes de la peau. L'utilisation de plusieurs spectromètres synchronisés avec la commande des signaux d'excitation permet à la fois d'améliorer la pureté du signal enregistré et d'accéder à l'information spectrale qui caractérise les signaux recueillis. On acquiert ainsi différentes intensités provenant de différentes profondeurs en disposant les fibres optiques de réception en cercles concentriques. A chaque excitation, les spectromètres recueillent tous les signaux de la zone utile de façon simultanée et dans les mêmes conditions d'illumination. La zone utile est la surface anatomique contenue dans le cercle de plus grand diamètre.

Avec le dispositif selon l'invention, chaque spectromètre recueille des signaux provenant d'un groupe de fibres optiques, donc d'une même profondeur dans l'échantillon. La somme des signaux de fibres optiques associée à un même cercle permet d'avoir un signal plus intense et donc plus significatif car caractérisé par un meilleur rapport signal à bruit. Cette configuration particulière permet d'avoir une résolution spatiale avec une qualité de signal qui améliore la précision diagnostique. On a ainsi accès à une information sur différents niveaux de profondeurs de l'échantillon.

Les signaux provenant de l'échantillon sont des signaux rétro-diffusés ou des signaux générés par l'échantillon après excitation.

Le dispositif selon l'invention constitue particulièrement un outil d'aide à l'orientation diagnostique en proposant une classification automatisée (donc indépendamment du niveau d'expertise du clinicien) des sites cutanés dans des classes histologiques d'intérêt cliniques.

L'utilisation de diodes électroluminescentes et la configuration spatiale de la sonde optique souple permet d'obtenir une durée d'acquisition courte, et donc de respecter les limites d'exposition de la surface cutanée à des rayonnements lumineux. Une exposition trop longue pourrait engendrer des brûlures ou des effets mutagènes propres au rayonnement ultra-violet.

Le dispositif selon l'invention permet donc de réaliser de la spectroscopie fibrée résolue spatialement, couplant des mesures de spectres d'intensité d'autofluorescence (AF) en multiples excitations (UVA-Visible) et des mesures de spectres de réflectance diffuse (RD). Le caractère bimodal est le fait d'obtenir ces deux types de spectre. Il a été démontré que la bimodalité et la multiple excitation permettaient de combiner plusieurs types d'informations et donc d'améliorer la précision diagnostique.

Une lampe au xénon conventionnelle (excitation continue) a une durée de vie de 300 heures maximum. Dans l'art antérieur, une telle lampe au xénon à arc court est utilisée en association avec un système complexe de filtres passe-bande et filtres linéairement variables pour isoler les signaux monochromatiques à l'excitation.

Dans la présente invention, l'utilisation de diodes électroluminescentes autorise des cadences élevées et une durée de vie de plusieurs milliers d'heures, au moins 10 000 heures. A titre d'exemple, on peut réaliser une séquence d'acquisition (une série d'excitations successives des diodes électroluminescentes et de la lampe polychromatique) en environ 6 s.

Selon une caractéristique avantageuse de l'invention, la lampe polychromatique est une lampe pulsée.

Une telle lampe présente des temps de réaction compatible avec une utilisation séquentielle. Avantageusement, la précision de synchronisation entre la lampe polychromatique et les spectromètres est optimum car l'émission de la lampe pulsée est contrôlée en nombre de pulses. Les spectromètres enregistrant le signal de la lampe sont alors synchronisés sur ce nombre de pulses et non sur une durée d'émission de la lampe, permettant ainsi une mesure plus rapide. Une lampe xénon conventionnelle est soit allumée soit éteinte et passer rapidement d'un état à l'autre compromet son fonctionnement.

Selon une caractéristique avantageuse de l'invention, la lampe polychromatique peut être une lampe au xénon pulsée et émettant de la lumière blanche.

Une telle lampe pulsée au xénon est large bande et présente de nombreux avantages tels que:
- un contrôle de grande précision de l'émission par nombre de pulses par secondes, et
- un dégagement de chaleur largement diminué par rapport à une lampe au xénon conventionnelle qui dégage une quantité de chaleur rédhibitoire pour une utilisation en tant que dispositif médical.

Selon un mode de réalisation avantageux de l'invention, les diodes électroluminescentes monochromatiques sont au nombre de six et émettent chacune à une longueur d'onde distincte.

Ces diodes électroluminescentes monochromatiques peuvent avantageusement émettre respectivement aux longueurs d'ondes suivantes : 365nm, 375nm, 385nm, 395nm, 405nm et 415nm.

La spectroscopie de fluorescence appliquée au diagnostic sur les tissus humains normaux et anormaux exige souvent une complète caractérisation des propriétés d'absorption et de fluorescence dans la bande de longueur d'onde UVA-Visible-PIR.

Ainsi, une excitation selon l'invention à l'aide de plusieurs longueurs d'onde successives permet potentiellement d'exciter différents fluorophores, permettant par exemple d'atteindre des modèles d'émission plus complexes sous la forme de matrices d'excitation-émission.

A titre d'exemple non limitatif, les spectromètres sont au nombre de quatre, chacun étant destiné à recevoir des signaux provenant de fibres optiques réceptrices associées à un même desdits cercles concentriques. L'utilisation de quatre spectromètres permet d'atteindre un optimum en termes de précision diagnostique. L'utilisation de plus ou moins de spectromètres pourrait conduire à une perte de précision diagnostique ou à un surplus de signal trop faible pour être exploitable.

Contrairement à certains dispositifs de l'art antérieur qui utilisent un spectrographe comme bloc de détection, dans la présente invention on utilise un ensemble limité de spectromètres. Cela permet de réduire l'encombrement et la fragilité, donc d'améliorer la compacité et l'ergonomie d'utilisation. Le coût et le poids du dispositif sont réduits par rapport à l'utilisation d'un spectrographe qui est généralement doté d'une caméra organisée en capteurs photosensibles.

Avec quatre spectromètres, on améliore la qualité de l'enregistrement du signal car avec le spectrographe unique, il y a un risque de diaphonie entre différentes fibres optiques de réception. L'homme du métier n'aurait pas été incité à remplacer un spectrographe par plusieurs spectromètres car il aurait été freiné par la difficulté de synchronisation de plusieurs spectromètres. La présente invention résout la problématique de synchronisation en utilisant par exemple, dans l'unité de traitement, un déclencheur matériel obtenu en paramétrant un microcontrôleur et en utilisant des câbles DIN à 8 branches pour synchroniser le bloc de détection par rapport au bloc d'excitation mais également les 4 spectromètres entre eux, assurant ainsi une simultanéité parfaite d'enregistrement des spectromètres. La simultanéité est importante pour assurer que les signaux sont acquis pour un seul et même site anatomique. La synchronisation matérielle apporte une précision qui n'existe pas si la synchronisation est faite de manière logicielle. Par synchronisation matérielle on entend une consigne électronique, typiquement un front montant ou descendant ou une impulsion, transmise par l'unité de traitement vers les spectromètres via une liaison électronique câblée entre l'unité de traitement et chacun des spectromètres. Un front montant est donc envoyé vers chacun des spectromètres. Cette liaison est notamment directe.

Selon un mode de réalisation avantageux de l'invention, chaque spectromètre à une ouverture de fente qui est fonction de la distance entre le cercle concentrique associé et la fibre optique d'excitation. De préférence, plus le cercle concentrique est éloigné de la fibre optique d'excitation, plus l'ouverture de fente du spectromètre correspondant est grande.

L'utilisation d'une fente plus large en entrée d'un spectromètre permet l'entrée d'une plus grande quantité de signal lumineux, ce qui est avantageux pour la détection de signaux provenant de fibres optiques éloignées, côté distal, de la fibre optique d'excitation. Les fibres optiques les plus éloignées sont celles qui véhiculent les signaux les moins intenses. Une telle mise en oeuvre permet l'amélioration de la qualité du signal détecté, c'est-à-dire un meilleur rapport signal à bruit. Alors que dans le cas de l'utilisation d'un seul spectrographe, une seule fente est utilisée pour toutes les fibres optiques (plus ou moins distantes de la fibre optique d'excitation du côté distal).

Selon une caractéristique de l'invention, la sonde optique souple peut comporter six fibres optiques réceptrices par cercle concentrique. Chaque cercle correspond avantageusement à des signaux provenant d'une profondeur différente de l'échantillon.

Selon une caractéristique avantageuse de l'invention, le dispositif peut comprendre un injecteur optique d'excitation comprenant d'une part plusieurs entrées connectées respectivement à l'ensemble des diodes électroluminescentes monochromatiques et à la lampe pulsée polychromatique, et d'autre part une sortie connectée à la même fibre optique d'excitation.

Par ailleurs, le dispositif selon l'invention peut également comprendre un premier et un second supports de chaque côté de la roue à filtres, le premier support portant un connecteur pour chaque groupe de fibres optiques de détection associées à l'un desdits cercles concentriques ; le second support portant des connecteurs équipés chacun d'au moins une fibre optique pour acheminer respectivement les signaux provenant desdits groupes de fibres optiques vers les spectromètres respectifs. De préférence, les supports sont fixes et c'est la roue qui pivote en fonction du filtre à présente en face de tous les groupes de fibres optiques.

Les injecteurs optiques d'excitation peuvent consister en une fusion de plusieurs fibres optiques vers une seule fibre optique.

Selon un autre aspect de l'invention, il est proposé un procédé de spectroscopie optique bimodale pour élaborer des spectres de signaux d'auto-fluorescence et de réflectance diffuse provenant d'un échantillon biologique selon la revendication 12.

Les mesures collectées grâce à cette technique sont des jeux de spectres d'intensités fonction des longueurs d'onde d'émission (plusieurs centaines), d'excitation et d'un nombre limité de fibres optiques de réception (résolution spatiale avec trois à six cercles concentriques). Ces jeux de données multidimensionnelles peuvent être exploités pour une classification diagnostique par traitement de signaux comprenant des étapes de prétraitement des spectres, de sélection de caractéristiques spectroscopiques discriminantes, et de classification multi-catégories. On peut ainsi parvenir à une caractérisation optique non invasive des tissus.

Selon un mode de mise en oeuvre avantageux, lors d'un cycle d'excitation, les diodes électroluminescentes et la lampe pulsée peuvent être allumées selon des durées différentes.

Selon l'invention, lors d'un cycle de recueil des photons, les spectromètres peuvent recueillir les photons chacun pendant des durées différentes.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :
- la figure 1 est une vue schématique simplifiée d'un dispositif selon l'invention,
- la figure 2 est une vue schématique simplifiée d'un exemple d'implémentation du dispositif selon l'invention,
- la figure 3 est une vue de face schématique simplifiée de l'extrémité distale de la sonde optique souple selon l'invention, et
- la figure 4 est une vue schématique simplifiée de la disposition de la roue à filtres.

On va maintenant décrire un dispositif permettant d'élaborer des spectres d'intensités en fonction de la longueur d'onde. Une analyse de ces spectres permettrait de caractériser la nature du tissu analysé. Il s'agit en particulier d'une spectroscopie optique fibrée pour détecter et caractériser de façon non invasive des lésions précancéreuses et difficilement classifiables en clinique. L'excitation du tissu par des faisceaux lumineux génère des signaux d'autofluorescence et de réflectance qui, une fois captés rendent compte de l'état pathologique ou non du tissu. En effet, certaines transformations métaboliques et morphologiques, pathologiques et précoces, modifient les propriétés optiques des tissus biologiques à l'échelle subcellulaire, cellulaire et tissulaire.

Le dispositif selon l'invention permet de réaliser de la spectroscopie fibrée en couplant des mesures de spectres d'intensité d'autofluorescence (AF) en multiples excitations (UV-Visible) et des mesures de spectres de réflectance diffuse (RD).

Le nombre de fluorophores qui va être excité et l'importance de leur contribution respective à l'émission d'autofluorescence tissulaire dépendent de la longueur d'onde choisie pour illuminer le tissu. Par exemple, une excitation lumineuse dans le bleu (vers 410 nm) provoquera une forte émission des flavines (coefficient d'extinction molaire maximum autour de cette longueur d'onde), mais n'excitera pratiquement aucun autre fluorophore. En revanche, une longueur d'onde vers 360 nm permettra l'excitation du collagène, du NADH et dans une bien moindre mesure, des flavines. Selon la longueur d'onde d'excitation utilisée, on pourra donc observer de manière sélective les émissions des différents fluorophores et le spectre d'autofluorescence tissulaire résultera de la superposition de ces différentes émissions.

Selon l'invention, on prévoit d'utiliser, à titre d'exemple non limitatif, six longueurs d'onde d'excitation allant de 365nm à 415nm.

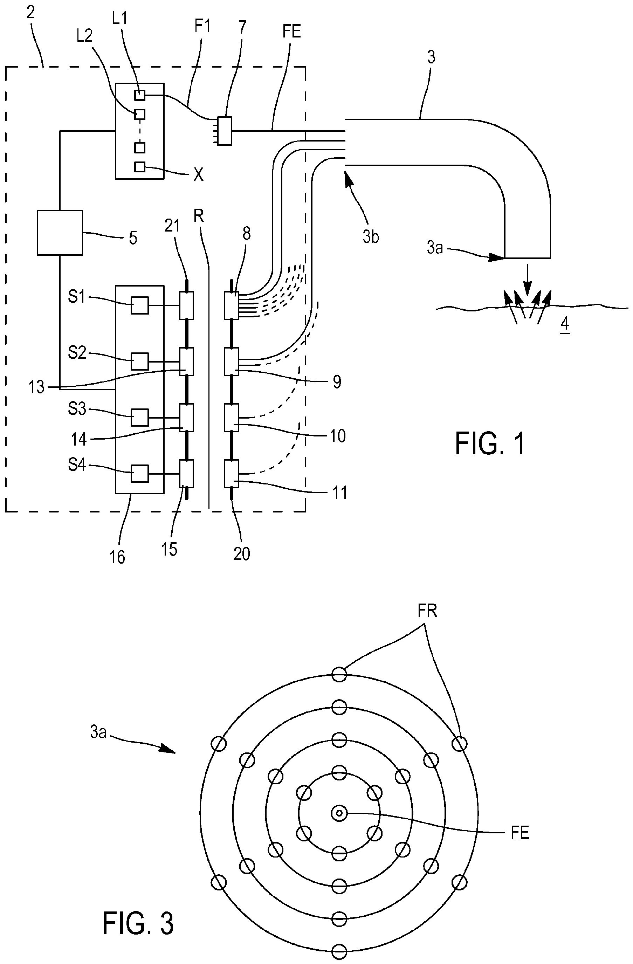

Sur la figure 1 est illustré un schéma très simplifié du dispositif selon l'invention. On distingue de façon générale le dispositif selon l'invention 1 comprenant un caisson 2 et une sonde optique souple 3 connectée au caisson 2 et destinée à venir à proximité ou se poser sur une peau 4 à analyser.

Le caisson 2 comprend une unité de traitement 5 dotée de moyens matériels et logiciels pour le contrôle d'autres composants contenus dans le caisson. Le bloc d'excitation 6 comprend six diodes électroluminescentes et une lampe pulsée au xénon. Les éléments du bloc d'excitation sont déclenchés de façon séquentielle les uns à la suite des autres. Lorsque la diode électroluminescente L1 est alimentée, son faisceau lumineux d'excitation est acheminé via la fibre optique F1 jusqu'à l'injecteur optique d'excitation 7 qui comporte une unique fibre optique de sortie FE qui constitue la fibre optique centrale de la sonde optique souple 3. Cette fibre optique d'excitation FE aboutit à l'extrémité distale 3a de la sonde optique souple 3 de sorte que le faisceau lumineux provenant de la fibre optique L1 est dirigé vers l'échantillon biologique 4. Les différentes couches de l'échantillon réagissent en émettant des signaux d'autofluoresence qui sont captés par des fibres optiques de réception FR disposées autour de la fibre optique d'excitation. La figure 3 illustre une répartition des fibres optiques constitutives de la sonde optique souple, en vue de face du côté distal. La fibre optique d'excitation est en position centrale, les fibres optiques de réception FR sont par groupes de six, chaque groupe formant un cercle centré sur la fibre optique d'excitation FE. On distingue quatre groupes, chacun destiné à capter des signaux provenant d'une profondeur différente de la peau. Les fibres optiques de réception FR situées loin du centre du cercle captent les signaux provenant des plus grandes profondeurs. Dans le cas d'espèce, on capte des signaux sur quatre épaisseurs.

A titre d'exemple, les diamètres des fibres optiques sont définis ainsi:
- fibres optiques connectées aux sources de lumière : 200 micromètres,
- fibre optique excitatrice (extrémité distale en contact avec l'échantillon biologique) à laquelle les six fibres optiques connectées aux sources de lumière transmettent leur lumière : 600 micromètres,
- fibres optiques pour la réception : 200 micromètres.

Les diamètres des cercles le long desquels sont disposées les fibres optiques réceptrices et centrés autour de la fibre optique excitatrice centrale sont définis ainsi : 400, 600, 800 et 1 000 micromètres (+/- 50 micromètres) respectivement pour chacun des quatre cercles concentriques.

Le niveau d'intensité en sortie de la fibre optique d'excitation sur la bande spectrale comprise entre 300 et 700 nm peut être selon la source lumineuse :
- pour la diode à 365 nm : 5 852 W/m²/sr
- pour les autres diodes : entre 30 000 et 45 000 W/m²/sr
- pour la lampe blanche : 41 W/m²/sr

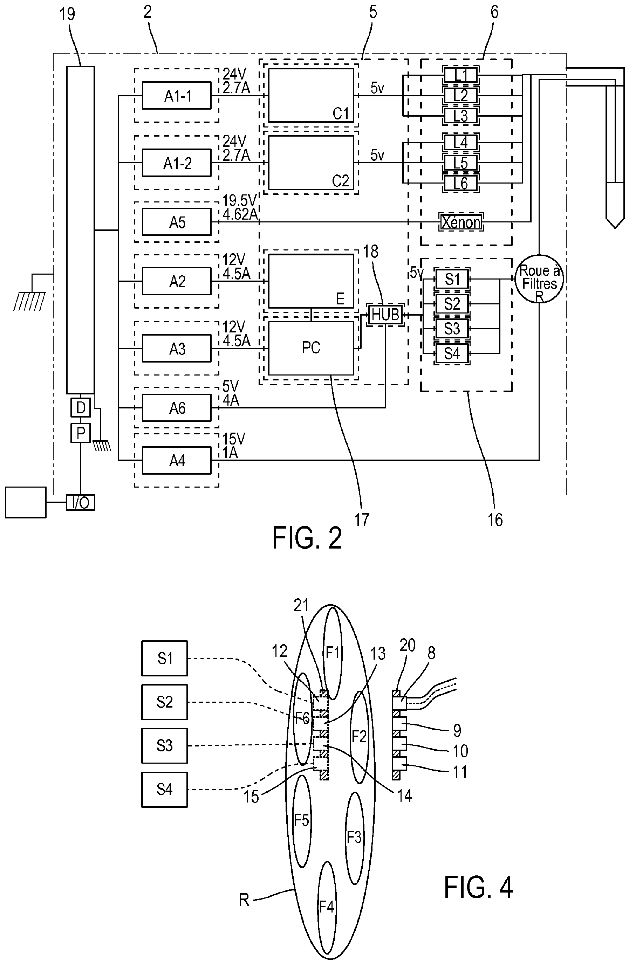

A l'extrémité proximale 3b sur la figure 1, les fibres optiques de réception FR de chaque groupe sont introduites respectivement dans des connecteurs 8, 9, 10 et 11 portés par un premier support 20. Une roue à filtres R est commandée de façon à interposer un filtre passe-haut caractérisé par la longueur d'onde de coupure qui permet de rejeter la longueur d'onde d'excitation utilisée. Sur la figure 4 est illustré un exemple de disposition de la roue à filtres R. Cette roue se présente comme un disque rotatif comprenant plusieurs filtres, au nombre de six dans le cadre de l'exemple de la figure 1, F1 à F6, correspondant aux six diodes électroluminescentes d'excitation. Les filtres sont en forme de disques répartis en périphérie de la roue. D'autres formes peuvent être utilisées. Le premier support 20 est conçu pour maintenir fixe les quatre groupes de fibres optiques, chacun comportant six fibres optiques de détection. A chaque excitation, la roue R pivote (pilotée par l'unité de traitement) pour présenter face à l'ensemble des groupes, le filtre correspond au signal d'excitation. De l'autre côté du filtre, un second support 21 porte de manière fixe des connecteurs 12, 13, 14 et 15 en vis-à-vis des connecteurs 8, 9, 10 et 11 respectivement. Les connecteurs 12, 13, 14 et 15 acheminent les signaux filtrés des quatre groupes de fibres optiques de détection respectivement vers les quatre spectromètres S1, S2, S3 et S4. Le second support 21 peut être vissé sur la roue à filtres. Il peut s'agir d'un support de connecteurs SMA sur lequel quatre fibres optiques se connectent pour acheminer la lumière de la roue à filtres, après que la lumière a traversé le filtre adéquat, vers les spectromètres. De préférence, aucun filtre n'est appliqué pour une lumière blanche d'excitation.

Les spectromètres sont donc alimentés simultanément à chaque excitation.

Lorsque la diode électroluminescente L1 est excitée, on excite ensuite la diode électroluminescente L2 et ainsi de suite jusqu'à exciter la lampe pulsée au xénon X. L'unité de traitement 5 gère la synchronisation entre les différents blocs et récupère les spectres pour un traitement avant affichage sur des moyens d'affichage intégrés.

Sur la figure 2 on voit un peu plus en détail un exemple d'implémentation du dispositif selon l'invention, et plus particulièrement le caisson 2 de la figure 1.

On distingue le bloc d'excitation comprenant les six diodes électroluminescentes L1 à L6 et la lampe flash xénon X, c'est-à-dire une lampe pulsée. Les diodes électroluminescentes émettent des lumières monochromatiques dont les bandes spectrales d'émission sont par exemple centrées respectivement à 365, 375, 385, 395, 405 et 415 nm. Les bandes spectrales d'émission ont de préférence chacune une largeur à mi-hauteur d'une dizaine de nm environ. La lampe flash xénon émet quant à elle une lumière blanche (polychromatique). En pratique, on dispose de deux contrôleurs C1 et C2 destinés à contrôler les diodes électroluminescentes, activation et extinction en fonction de consignes provenant de l'ordinateur 17. Le premier contrôleur C1 contrôle les diodes électroluminescentes L1 à L3. Le second contrôleur C2 contrôle les diodes électroluminescentes L4 à L6. La lampe flash xénon est directement contrôlée par l'ordinateur 17.

Chaque élément du bloc d'excitation est destiné à émettre un rayonnement lumineux dans la sonde optique souple 3, de deux millimètres de diamètre extérieur et deux mètres de longueur, constituée de plusieurs fibres optiques. La fibre optique d'excitation disposée à l'intérieur de la sonde sert à acheminer la lumière vers l'échantillon biologique (peau par exemple) à analyser. Plusieurs fibres optiques de réception servent à acheminer la lumière depuis l'échantillon biologique jusqu'aux spectromètres qui vont analyser cette lumière et fournir des informations sur la nature de l'échantillon biologique. Comme précisé précédemment les fibres optiques de réception sont disposées en groupes.

Le bloc de détection comprend quatre spectromètres S1, S2, S3 et S4 qui enregistrent les spectres de la lumière provenant de la peau pour qu'ils soient ensuite analysés. Avantageusement, les spectromètres sont synchronisés de façon câblée ou matérielle. Selon l'invention, on utilise un microcontrôleur 18 pour générer simultanément un front montant (0-5V) vers les quatre spectromètres via quatre câbles DIN huit branches. Le déclenchement est simultané et on acquiert ainsi les signaux selon les quatre distances pour un seul et unique site anatomique. Cette disposition est plus avantageuse que l'utilisation d'un bus USB de l'ordinateur pour les adresser de façon logicielle, c'est-à-dire un déclenchement des quatre spectromètres de manière séquentielle, avec le risque de déplacement relatif de la sonde par rapport à l'échantillon pendant la séquence. Or, il est préférable qu'un premier spectromètre enregistre un spectre issu du même site anatomique que le 4^{ème} spectromètre par exemple.

Les résultats peuvent apparaître sur un écran tactile E connecté à l'ordinateur 17.

L'unité de traitement 5 est constituée des contrôleurs C1, C2, de l'ordinateur 17, de l'écran tactile E ainsi que du microcontrôleur 18 interposé entre l'ordinateur et les spectromètres de façon à contrôler ces derniers.

Des blocs d'alimentations A1 à A6 sont répartis pour alimenter l'ensemble des composants du caisson 2. Chaque alimentation est configurée en tension et en ampérage en fonction du composant à alimenter. Ces alimentations sont raccordées à une multiprise 19 reliée au réseau électrique via des protections telles un disjoncteur D et un parafoudre P.

L'ensemble du dispositif peut prendre la forme d'un rack mobile monté sur roulettes par exemple et constitué de trois étagères sur lesquelles sont fixées les composants décrits ci-dessus. Les dimensions de ce rack peuvent être d'environ 1 m de hauteur et 0,6 m de largeur et de profondeur.

L'ordinateur est configuré pour contrôler et synchroniser les blocs d'excitation et de détection pour que :
- l'éclairage puisse être séquentiel, c'est-à-dire consister en une séquence d'éclairage des six diodes électroluminescentes et de la lampe flash xénon successivement, chaque éclairage (excitation) pour une durée de l'ordre de la seconde, et
- l'enregistrement des spectres d'émission soit assuré pour chaque excitation.

L'invention est remarquable, notamment mais pas uniquement, par le fait que l'on acquiert la lumière provenant de l'échantillon, en particulier de la surface cutanée, en plusieurs sites pour un même site d'excitation lumineuse pour tous ces sites. Une telle mise en oeuvre permet une résolution spatiale élevée.

Le principe de détection repose sur le fait que l'autofluorescence des tissus sains et tumoraux présente de fortes différences à la fois sur le plan de l'intensité et de la forme des spectres d'émission. Les tissus normaux, précancéreux et cancéreux présentent des différences au niveau des spectres d'intensité en autofluorescence, absorption et diffusion dans la bande Visible-Proche IR (infrarouge). Ces modifications spectrales sont associées aux altérations des types de tissus, des concentrations des fluorophores, de la structure et de la vascularisation des tissus qui varient suivant sa nature saine ou tumorale.

Les principaux avantages cliniques de la détection par autofluorescence résident dans le caractère non invasif et atraumatique de la mesure. De plus, en raison de sa résolution spectrale, elle présente une grande sensibilité à la composition biochimique des tissus, ce qui permet de révéler *a priori* l'existence de lésions précoces et de fournir de nombreuses informations sur la constitution de l'échantillon étudié. L'utilisation de la sonde optique souple permet d'accéder facilement à l'intérieur de cavités anatomiques, le cas échéant.

Le dispositif selon l'invention est un outil d'aide à l'orientation diagnostique pour détecter et caractériser de façon non invasive les lésions précancéreuses. Les solutions technologiques mises en oeuvre permettent d'obtenir des signaux de bonne qualité pour une précision diagnostique optimisée, des mesures rapides. Son coût de fabrication contenu et sa compacité lui confèrent une ergonomie optimale pour une facilité d'utilisation en situation clinique.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de spectroscopie optique bimodale pour élaborer des spectres de signaux d'auto-fluorescence et de réflectance diffuse provenant d'un échantillon biologique, ce dispositif comprenant :
- un bloc d'excitation constitué de plusieurs diodes électroluminescentes monochromatiques et d'une lampe polychromatique,
- une sonde optique souple constituée d'une fibre optique d'excitation disposée, côté distal, au centre de la sonde optique souple pour acheminer successivement les signaux d'excitation de chaque élément du bloc d'excitation vers l'échantillon biologique, et de plusieurs fibres optiques réceptrices disposées, côté distal, sous la forme de plusieurs cercles concentriques autour de la fibre optique d'excitation pour acheminer des signaux provenant de l'échantillon à différents niveaux de profondeurs de l'échantillon;
- un bloc de détection comprenant plusieurs spectromètres, chacun recevant des signaux provenant de fibres optiques réceptrices disposées sur un même cercle dans la sonde optique, chaque cercle étant associé à un seul spectromètre,
- une roue à filtres pour éliminer des signaux d'excitation, et
- une unité de traitement pour piloter les blocs d'excitation et de détection et assurer une synchronisation entre ces blocs lors de mesures.

2. Dispositif selon la revendication 1, **caractérisé en ce que** la lampe polychromatique est une lampe pulsée.

3. Dispositif selon la revendication 1 ou 2, **caractérisé en ce que** la lampe polychromatique est une lampe au xénon pulsée et émettant de la lumière blanche.

4. Dispositif selon l'une quelconque des revendications précédentes, **caractérisé en ce que** les spectromètres sont au nombre de quatre, chacun étant destiné à recevoir des signaux provenant de fibres optiques réceptrices associées à un même desdits cercles concentriques.

5. Dispositif selon la revendication 4, **caractérisé en ce que** chaque spectromètre à une ouverture de fente qui est fonction de la distance entre le cercle concentrique associé et la fibre optique d'excitation.

6. Dispositif selon la revendication 5, **caractérisé en ce que**, plus le cercle concentrique est éloigné de la fibre optique d'excitation, plus l'ouverture de fente du spectromètre correspondant est grande.

7. Dispositif selon l'une quelconque des revendications précédentes, **caractérisé en ce que** la sonde optique souple comporte six fibres optiques réceptrices par cercle concentrique.

8. Dispositif selon l'une quelconque des revendications précédentes, **caractérisé en ce que** l'unité de traitement comprend un déclencheur matériel pour synchroniser le bloc de détection par rapport au bloc d'excitation.

9. Dispositif selon l'une quelconque des revendications précédentes, **caractérisé en ce qu'**un front montant est envoyé vers chacun des spectromètres.

10. Dispositif selon l'une quelconque des revendications précédentes, **caractérisé en ce qu'**il comprend un injecteur optique d'excitation comprenant d'une part plusieurs entrées connectées respectivement à l'ensemble des diodes électroluminescentes monochromatiques et à la lampe pulsée polychromatique, et d'autre part une sortie connectée à la même et unique fibre optique d'excitation.

11. Dispositif selon l'une quelconque des revendications précédentes, **caractérisé en ce qu'**il comprend un premier et un second supports de chaque côté de la roue à filtres, le premier support portant de manière fixe un connecteur pour chaque groupe de fibres optiques de détection associées à l'un desdits cercles concentriques ; le second support portant des connecteurs équipés chacun d'au moins une fibre optique pour acheminer respectivement les signaux provenant desdits groupes de fibres optiques vers les spectromètres respectifs.

12. Procédé de spectroscopie optique bimodale pour élaborer des spectres de signaux d'auto-fluorescence et de réflectance diffuse provenant d'un échantillon biologique, ce procédé comprenant les étapes suivantes :
- excitations successives de l'échantillon au moyen de diodes électroluminescentes et d'une lampe pulsée à travers une unique fibre optique d'excitation disposée au centre d'une sonde optique souple côté distal,
- à chaque excitation, détection simultanée à différents niveaux de profondeurs de l'échantillon des signaux d'autofluorescence et de réflectance diffuse au moyen de fibres optiques de détection de la sonde optique souple disposées côté distal sous la forme de plusieurs cercles concentriques autour de la fibre d'excitation,
- réception des signaux provenant de fibres optiques par plusieurs spectromètres distincts, chaque spectromètre recevant des signaux provenant de fibres optiques associées à un même cercle concentrique, chaque cercle étant associé à un seul spectromètre, de façon à élaborer un spectre.

13. Procédé selon la revendication 12, **caractérisé en ce que** lors d'un cycle de recueil des photons, les spectromètres sont aptes à recueillir les photons chacun pendant des durées différentes.

## Patentansprüche

1. Vorrichtung für bimodale optische Spektroskopie zur Erstellung von Spektren von Autofluoreszenz- und diffusen Reflexionssignalen aus einer biologischen Probe, wobei diese Vorrichtung das Folgende enthält:
- einen Anregungsblock, bestehend aus mehreren monochromatischen LEDs und einer polychromatischen Lampe,
- eine nachgiebige optische Sonde, die aus einem Anregungslichtwellenleiter besteht, der distal in der Mitte der nachgiebigen optischen Sonde angeordnet ist, um nacheinander die Anregungssignale von jedem Element des Anregungsblocks zur biologischen Probe zu leiten, sowie aus mehreren Empfangslichtwellenleitern, die distal in Form von mehreren konzentrischen Kreisen um den Anregungslichtwellenleiter herum angeordnet sind, um Signale von der Probe aus verschiedenen Tiefenebenen der Probe weiterzuleiten;
- einen Detektorblock mit mehreren Spektrometern, die jeweils Signale von Empfangslichtwellenleitern empfangen, die auf demselben Kreis in der optischen Sonde angeordnet sind, wobei jeder Kreis einem einzelnen Spektrometer zugeordnet ist,
- einen Filterrevolver zum Entfernen von Anregungssignalen, und
- eine Verarbeitungseinheit, um die Anregungs- und Detektorblöcke anzusteuern und eine Synchronisation zwischen diesen Blöcken während der Messungen sicherzustellen.

2. Vorrichtung nach Anspruch 1, **dadurch gekennzeichnet, dass** die polychromatische Lampe eine gepulste Lampe ist.

3. Vorrichtung nach Anspruch 1 oder 2, **dadurch gekennzeichnet, dass** die polychromatische Lampe eine gepulste Xenon-Lampe ist, die weißes Licht ausstrahlt.

4. Vorrichtung nach einem der vorhergehenden Ansprüche, **dadurch gekennzeichnet, dass** die Spektrometer in einer Anzahl von vier vorliegen, die jeweils dazu bestimmt sind, Signale von Empfangslichtwellenleitern zu empfangen, die ein und demselben der konzentrischen Kreise zugeordnet sind.

5. Vorrichtung nach Anspruch 4, **dadurch gekennzeichnet, dass** jedes Spektrometer eine Spaltöffnung aufweist, die eine Funktion der Entfernung zwischen dem zugeordneten konzentrischen Kreis und dem Anregungslichtwellenleiter ist.

6. Vorrichtung nach Anspruch 5, **dadurch gekennzeichnet, dass** die Spaltöffnung des entsprechenden Spektrometers umso größer ist, je weiter der konzentrische Kreis von dem Anregungslichtwellenleiter entfernt liegt.

7. Vorrichtung nach einem der vorhergehenden Ansprüche, **dadurch gekennzeichnet, dass** die nachgiebige optische Sonde pro konzentrischen Kreis sechs Empfangslichtwellenleiter aufweist.

8. Vorrichtung nach einem der vorhergehenden Ansprüche, **dadurch gekennzeichnet, dass** die Verarbeitungseinheit einen Hardware-Trigger zum Synchronisieren des Detektorblocks in Bezug auf den Anregungsblock enthält.

9. Vorrichtung nach einem der vorhergehenden Ansprüche, **dadurch gekennzeichnet, dass** den Spektrometern jeweils eine ansteigende Flanke zugeleitet wird.

10. Vorrichtung nach einem der vorhergehenden Ansprüche, **dadurch gekennzeichnet, dass** sie einen optischen Anregungsinjektor umfasst, der einerseits mehrere Eingänge, die jeweilig mit sämtlichen monochromatischen LEDs und der gepulsten polychromatischen Lampe verbunden sind, und andererseits einen Ausgang aufweist, der mit ein und demselben Anregungslichtwellenleiter verbunden ist.

11. Vorrichtung nach einem der vorhergehenden Ansprüche, **dadurch gekennzeichnet, dass** sie eine erste und eine zweite Halterung auf jeder Seite des Filterrevolvers umfasst, wobei die erste Halterung fest einen Verbinder für jede Gruppe von Detektorlichtwellenleitern trägt, die einem der Kreise zugeordnet sind; wobei die zweite Halterung Verbinder trägt, die jeweils mit mindestens einem Lichtwellenleiter versehen sind, um die jeweiligen Signale von den genannten Gruppen von Lichtwellenleitern zu den jeweiligen Spektrometern zu leiten.

12. Verfahren der bimodalen optischen Spektroskopie zur Erstellung von Spektren von Autofluoreszenz- und diffusen Reflexionssignalen aus einer biologischen Probe, wobei das Verfahren die folgenden Schritte umfasst:
- sukzessives Anregen der Probe mittels LEDs und einer gepulsten Lampe durch einen einzigen Anregungslichtwellenleiter, der distal in der Mitte einer nachgiebigen optischen Sonde angeordnet ist,
- bei jeder Anregung gleichzeitiges Erfassen von Autofluoreszenz- und diffusen Reflexionssignalen aus verschiedenen Tiefenebenen der Probe mittels Detektorlichtwellenleitern der nachgiebigen optischen Sonde, die distal in Form von mehreren konzentrischen Kreisen um den Anregungslichtwellenleiter herum angeordnet sind,
- Empfangen der Signale von den Lichtwellenleitern durch mehrere, verschiedene Spektrometer, wobei jedes Spektrometer Signale von Lichtwellenleitern empfängt, die demselben konzentrischen Kreis zugeordnet sind, wobei jeder Kreis einem einzelnen Spektrometer zugeordnet ist, so dass ein Spektrum erstellt werden kann.

13. Verfahren nach Anspruch 12, **dadurch gekennzeichnet, dass** in einem Zyklus der Photonenaufnahme die Spektrometer in der Lage sind, die Photonen jeweils für unterschiedliche Zeiträume aufzunehmen.

## Claims

1. Bimodal optical spectroscopy device for producing spectra of autofluorescence and diffuse reflectance signals originating from a biological sample, this device comprising:
- an excitation unit constituted by several monochromatic light-emitting diodes and a polychromatic lamp,
- a flexible optical probe constituted by an excitation optical fibre arranged, on the distal side, at the centre of the flexible optical probe in order to successively convey the excitation signals from each element of the excitation unit to the biological sample, and several receiving optical fibres arranged, on the distal side, in the form of several concentric circles around the excitation optical fibre in order to convey signals originating from the sample at different depth levels of the sample;
- a detection unit comprising several spectrometers, each receiving signals originating from receiving optical fibres arranged on one and the same circle in the optical probe, each circle being associated with a single spectrometer,
- a filter wheel for removing excitation signals, and
- a processing unit for controlling the excitation and detection units and for ensuring synchronization between these units during measurements.

2. Device according to claim 1, **characterized in that** the polychromatic lamp is a pulsed lamp.

3. Device according to claim 1 or 2, **characterized in that** the polychromatic lamp is a pulsed xenon lamp emitting white light.

4. Device according to any one of the preceding claims, **characterized in that** there are four spectrometers, each being intended to receive signals originating from receiving optical fibres associated with one and the same of said concentric circles.

5. Device according to claim 4, **characterized in that** each spectrometer has a slit-shaped opening which is a function of the distance between the associated concentric circle and the excitation optical fibre.

6. Device according to claim 5, **characterized in that**, the further the concentric circle is from the excitation optical fibre, the larger the slit-shaped opening of the corresponding spectrometer.

7. Device according to any one of the preceding claims, **characterized in that** the flexible optical probe contains six receiving optical fibres per concentric circle.

8. Device according to any one of the preceding claims, **characterized in that** the treatment unit comprises a hardware trigger in order to synchronize the detection unit with respect to the excitation unit.

9. Device according to any one of the preceding claims, **characterized in that** a rising edge is sent to each of the spectrometers.

10. Device according to any one of the preceding claims, **characterized in that** it comprises an excitation optical injector comprising on the one hand several inputs connected respectively to the monochromatic light-emitting diode assembly and to the polychromatic pulsed lamp, and on the other hand connected to the one and only excitation fibre.

11. Device according to any one of the preceding claims, **characterized in that** it comprises a first and a second support on either side of the filter wheel, the first support bearing in a fixed manner a connector for each group of detection optical fibres associated with one of said concentric circles; the second support bearing connectors each equipped with at least one optical fibre for conveying respectively the signals originating from said groups of optical fibres to the respective spectrometers.

12. Bimodal optical spectroscopy method for producing spectra of autofluorescence and diffuse reflectance signals originating from a biological sample, this method comprising the following steps:
- successive excitations of the sample by means of light-emitting diodes and a pulsed lamp through a single excitation optical fibre arranged at the centre of a flexible optical probe on the distal side,
- at each excitation, simultaneous detection at different depth levels of the sample of the autofluorescence and diffuse reflectance signals by means of detection optical fibres of the flexible optical probe arranged on the distal side in the form of several concentric circles around the excitation fibre,
- reception of signals originating from optical fibres by several different spectrometers, each spectrometer receiving signals originating from optical fibres associated with one and the same concentric circle, each circle being associated with a single spectrometer, so as to produce a spectrum.

13. Method according to claim 12, **characterized in that** during a photon collection cycle, the spectrometers are each suitable for collecting photons for different durations.
